# FASCICULE DE BREVET EUROPEEN

(11) **EP 1 469 748 B1**
(45) Date de publication et mention de la délivrance du brevet: **16.07.2008**
(21) Numéro de dépôt: 03729453.5
(22) Date de dépôt: 14.01.2003
(51) Int. Cl.: A23L 1/31, A23L 1/314, A23P 1/08, A23P 1/12, A23L 1/272, A23K 1/00, A23K 1/16

(54) **ELABORATION DE PRODUITS AYANT UN ASPECT ROTI**
VERFAHREN ZUR HERSTELLUNG VON RÖSTPRODUKTEN
PREPARATION OF PRODUCTS HAVING ROASTED APPEARANCE

(30) Priorité: 18.01.2002 EP 02001035
(43) Date de publication de la demande: 27.10.2004
(73) Titulaire: Société des Produits Nestlé S.A., 1800 Vevey (CH)
(72) Inventeur: LABORBE, Jean-Marie, F-80090 Amiens (FR); LEFEBVRE, Frédéric, F-80300 Albert (FR)
(74) Mandataire: Lock, Graham James
(86) Numéro de dépôt international: PCT/EP2003/000286
(87) Numéro de publication internationale: WO 2003/059090

(56) Documents cités:
- EP-A- 0 203 725
- EP-A- 0 650 671
- EP-A- 0 668 024
- WO-A-00/65937
- US-A- 3 586 512

## Description

### DOMAINE DE L'INVENTION

L'invention concerne une composition alimentaire pour animaux comprenant un enrobage particulier permettant, après cuisson rapide, d'obtenir des produits ayant un aspect rôti. L'invention concerne également un procédé de fabrication de ce produit.

### ÉTAT DE LA TECHNIQUE

Les méthodes et produits permettant d'obtenir des compositions brunies, dorées ou fumées se sont beaucoup développés ces dernières années avec l'apparition de nouveaux modes de cuisson, tels que le four à micro-ondes ou le four à la vapeur, qui permettent une diminution du temps de cuisson, mais dont l'énorme inconvénient est de ne pas ou peu colorer la surface des aliments.

Une première méthode de brunissement de la viande, du poisson, etc., consiste en la vaporisation ou pulvérisation de solutions liquides colorées telles que celles décrites dans les brevets US 6,261,623 ou US 6,090,421. Mais, ces solutions contribuent seulement à donner un aspect fumé relativement uniforme et, éventuellement, le goût caractéristique des aliments fumés.

Un autre procédé de brunissement des aliments est la pyrolyse de sucre et d'amidon décrite dans les brevets US 5,292,541 et US 5,397,582. Il s'agit ici de solutions que l'on applique sur les aliments et qui après chauffage donnent un aspect et un goût fumé.

Des marinades multifonctionnelles qui sont à même de conf-érer simultanément un arôme, conserver l'humidité et brunir l'aliment sont décrites dans WO 00/65937. La marinade peut être pulvérisée ou badigeonnée au pinceau sur du poisson ou l'aliment par exemple, et ne doit pas être appliquée pendant longtemps avant la cuisson.

Une autre méthode utilisée pour imiter les cuissons traditionnelles est celle décrite dans le brevet US 5,756,140. Elle permet d'obtenir des aliments dorés et brillants en surface et ne consiste en fait qu'en une alternative au traditionnel badigeon à base de jaune d'oeuf.

Il existe également des agents brunissants pour la cuisson aux micro-ondes ou à la vapeur, décrits dans les brevets US 5,196,219, US 5,223,289 et 4,735,812. Ces agents sont composés d'au minimum une source d'acides aminés et d'une source de sucres réducteurs qui lors de la cuisson réalisent une réaction de Maillard. Toutes ces inventions tentent de remédier à un des défauts les plus notables de la cuisson aux micro-ondes ou à la vapeur, c'est à dire l'absence de couleur brune à la surface des aliments tels que, par exemple, la viande, le pain ou les pâtes. L'inconvénient de ces agents brunissants est qu'ils n'imitent qu'imparfaitement la cuisson au four traditionnel en colorant uniformément la surface des compositions.

La présente invention permet de pallier à ces inconvénients dans la mesure où l'on ne se contente pas de donner un aspect fumé, doré ou coloré uniforme et homogène, mais plutôt de donner un aspect rôti, tel qu'il peut être obtenu après cuisson au four traditionnel, c'est à dire un brunissement irrégulier et aléatoire à la surface de la composition, tout en utilisant des procédés de cuisson plus rapides, comme par exemple le four vapeur ou le four micro-ondes.

### RÉSUMÉ DE L'INVENTION

(L'invention est décrite le mieux par les revendications)

La présente invention concerne une composition pour l'alimentation animale, comprenant un enrobage particulier permettant, après cuisson, d'obtenir des produits ayant un aspect rôti. La composition de l'enrobage comprend au moins un pigment et une source de protéines. Lorsque la composition pour l'alimentation est couverte de cet enrobage particulier, elle doit être chauffée. La température de cuisson doit être suffisamment élevée pour permettre la coagulation des protéines contenues dans l'enrobage. Les protéines ainsi coagulées fixent le pigment. Cette réaction permet l'obtention de compositions ayant un aspect rôti, la surface de ces compositions est brunie de façon éparse, le pourcentage de surface rôtie pouvant être modulé par simple modification de la quantité de protéines et/ou de colorants contenue dans l'enrobage, ou simplement en faisant varier les durées et températures de cuisson.

La présente invention propose également une méthode pour préparer une émulsion, à base de protéines végétales ou animales, qui par un procédé de co-extrusion peut être couverte de cet enrobage particulier et après cuisson donner à cette émulsion un aspect rôti.

Enfin, cette invention peut concerner plus particulièrement l'alimentation animale et se présenter sous la forme de morceaux rôtis mélangés à de la sauce ou à une base, le tout étant stérilisé. Par base, on entend un mélange de viandes microbroyées et d'additifs technologiques, auxquels peuvent entre autres s'ajouter des morceaux naturels.

Le procédé de la présente invention est totalement différent de ce qui existe actuellement en ce sens que la composition alimentaire est enrobée d'un mélange comprenant au moins un colorant ou pigment et une source de protéines qui après être cuit par un système de cuisson tel que le système à air chaud, vapeur, air chaud et vapeur ou micro-ondes donne un aspect rôti à la composition. L'aspect rôti ainsi obtenu n'est pas homogène et cette irrégularité laisse l'impression d'un produit cuit au four traditionnel.

Dans le présent texte, par "viande" on entend "viande et/ou sous produit de viande", et par "poisson" on entend "poisson et/ou sous produit de poisson".

### DESCRIPTION DÉTAILLÉE DE L'INVENTION

La composition de l'enrobage selon la présente invention comprend au moins un colorant choisi entre un ou plusieurs parmi le sucre caramélisé, le sang (congelé ou en poudre) ou les oxydes minéraux et une source de protéines, telle que, par exemple, le plasma ou le gluten. Elle peut de plus contenir des composants pris par exemple parmi les suivants: des agents épaississants tels que l'amidon, le guar, le xanthane, le carboxymethylcellulose, le sodium alginate et autres composés appartenant à ces familles; des additifs tels que le sel, le sucre et l'acide ascorbique; des agents de saveur (tels que ceux qui, par exemple, donnent une saveur rôtie à la composition); de la farine; de l'eau.

Selon un mode préféré de l'invention, le colorant peut être, notamment, du sucre caramélisé (10 à 20% du poids de l'enrobage, de préférence 14 à 16%), du sang congelé ou en poudre (5 à 10%, de préférence 7 à 8%), des oxydes minéraux (5 à 10 %, de préférence 6 à 8%), ou un mélange de ces composés.

Il est également possible d'ajouter un épaisissant ou un mélange d'épaississants , par exemple dans une proportion de 2 à 8% s'il s'agit d'amidon, 0 à 2% s'il s'agit de guar, de xanthane ou de sodium alginate, 0 à 1 % dans le cas de carboxymethylcellulose.

Des agents liants ou un mélange d'agents liants peuvent ensuite entrer dans la composition de l'enrobage selon la présente invention, à hauteur par exemple de 0 à 5% lorsque la source choisise est le gluten, 0 à 10% lorsque la source d'agent liant est le plasma.

Des additifs peuvent être ajoutés, notamment 0 à 5% de sel et/ou de sucre, et/ou 0 à 1% d'acide ascorbique. L'enrobage contient généralement de la farine (25 à 35%) et de l'eau (30 à 50%).

De préférence, la source de protéines de l'enrobage est choisie parmi le plasma, le gluten ou le sang, ou un mélange de ces composés. Néanmoins, toute autre source de protéines connue de l'homme du métier peut être utilisée. Le pourcentage de protéine (en poids par rapport au poids total de l'enrobage) est de préférence compris entre 5 et 20%.

La fabrication de l'enrobage commence par le transfert des ingrédients secs dans un pétrin, lesquels sont ensuite mélangés aux autres ingrédients. Le tout est dirigé vers une trémie munie d'une pompe amenant le mélange à un émulsifieur. A cette étape, l'enrobage est pâteux. Il peut être stocké, puis acheminé vers l'outillage nécessaire pour enrober la composition alimentaire. L'enrobage pâteux est alors stocké dans une seconde trémie munie d'une pompe servant au transfert de l'enrobage au travers de l'outillage spécifique permettant l'association des deux sous-produits (enrobage-composition alimentaire à enrober).

La composition alimentaire à enrober peut être une émulsion. Dans ce cas, l'émulsion et l'enrobage peuvent être stockés dans deux trémies différentes, munies de pompes dont le débit peut être modifié par ajustement des fréquences des variateurs. Ces pompes serviront au transfert de l'enrobage et de l'émulsion à travers un outillage spécifique.

Cet outillage spécifique est pourvu de deux entrées différentes et est constitué d'une association concentrique de deux tubes de diamètre différents. L'enrobage est injecté dans le tube de diamètre supérieur afin d'enrober à la sortie du tube l'émulsion, qui, elle est injectée dans le tube central. Ce procédé peut être comparé au procédé de co-extrusion pouvant être utilisé dans le sec. La différence réside dans le fait que le produit utilisé comme fourrage dans l'industrie du sec n'est pas guidé. La veine injectée via un tube plongeant dans le produit extrudé ne se mélange pas à son enrobage.

Dans la présente invention, les deux sous-produits sont guidés pendant une certaine distance afin de garantir à la sortie de l'outillage un flux laminaire, le plus parfait possible, afin de ne pas avoir de mélange entre les deux sous-produits. La viscosité des deux sous-produits a un impact sur l'efficience d'un tel système.

Le produit ainsi préparé est transféré jusqu'à l'extrudeur. Il peut ensuite être cuit par un système air chaud, vapeur, air chaud et vapeur ou micro-ondes, par exemple, à une température et un temps de cuisson variant selon les ingrédients utilisés.

La présente invention peut s'appliquer à l'alimentation animale et se présenter sous forme de morceaux ayant un aspect rôti mélangés à une sauce ou une base.

Ces morceaux peuvent être préparés à partir d'un mélange de 55 à 85% de viandes et sous-produits de viande et/ou de poissons et sous-produits de poissons, de 10 à 25% de céréales, de 6 à 15% d'eau, lesdits morceaux étant préférentiellement préparés à partir d'un mélange de 58 à 68% de viandes et sous-produits de viande et/ou de poissons et sous-produits de poissons, 10 à 25% de céréales, de 0 à 5% (préférentiellement 2 à 5%) de protéines végétales et 5 à 14% d'eau.

L'élaboration de l'émulsion de viande suit un procédé classique décrit dans le brevet EP 668 024. Les viandes et sous-produits de viande et/ou de poissons et sous-produits de poissons sont concassés et broyés pour arriver à des morceaux ayant une taille de l'ordre de 12 mm, puis ils sont incorporés dans un mixer auquel on ajoute les ingrédients secs de la recette. Le tout est mélangé jusqu'à obtention d'une pâte homogène, puis transféré dans une trémie munie à sa base d'une pompe permettant le transfert du mélange vers l'émulsifieur. A cette étape des colorants peuvent éventuellement être ajouté à l'émulsion. L'émulsification se fait dans un émulsifieur double grille (par exemple du type Karl Schnell) à une température maximale de 15°C. L'émulsion de viande est alors stockée dans une trémie munie d'une pompe permettant le transfert de l'émulsion vers l'outillage spécifique permettant l'association spécifique des deux sous-produits (enrobage-émulsion).

Le produit ainsi préparé est par exemple transféré jusqu'à l'extrudeur. L'émulsion et son enrobage sont sous forme de plaques dont l'epaisseur et la largeur peuvent varier selon la géométrie de l'outillage utilisé.

L'ensemble émulsion-enrobage peut ensuite être cuit dans un système de cuisson en continu (par exemple système à air chaud, vapeur, air chaud et vapeur ou micro-ondes) à une température et un temps de cuisson variant selon les ingrédients utilisés. Les plaques sont ainsi figées par coagulation et sont tranchables à la sortie du dispositif de cuisson. Les protéines de l'enrobage ont également coagulé et ont piégé le pigment ou colorant contenu dans cet enrobage donnant ainsi un aspect rôti à la surface du produit. Les plaques peuvent être découpées en continu à la sortie du système de cuisson . Les morceaux peuvent être raffermis par refroidissement à une température comprise entre 10 et 40°C : le refroidissement est fait de préférence par aspersion ou immersion afin d'éviter le collage des morceaux les uns aux autres. Ces morceaux peuvent alors être cubés puis mélangés à la sauce ou la base et transféré dans des récipients. La composition peut alors, notamment, être stérilisée de manière classique à une température comprise entre 120 et 135°C pendant 20 à 100 min.

Les exemples suivants illustrent l'invention de manière non limitative.

### EXEMPLES

### Exemple 1

On prépare l'émulsion à partir de 63% de viandes et sous-produits de viande, notamment à partir de sous-produits de volaille (principalement carcasses), et/ou de sous-produits de porc ou boeuf (principalement foie et poumons), 15% de céréales, 1.5% de protéines texturantes végétales ou animales et 15% d'eau. L'emulsion contient aussi des vitamines , sels , arômes et colorants. On émulsifie ce mélange que l'on stocke dans une trémie munie d'une pompe qui servira par la suite au transfert de l'émulsion vers l'outillage spécifique.

L'enrobage est constitué d'un mélange de 15% de sucre caramélisé, 6% d'amidon, 1% de guar, 0.5% de carboxymethylcellulose, 30% de farine auquel on ajoute 40% d'eau et 7% de plasma jusqu'à obtention d'une solution homogène qui est alors émulsifiée, puis stockée dans une trémie munie d'une pompe qui servira par la suite au transfert de l'émulsion vers l'outillage spécifique.

L'enrobage et l'émulsion sont alors injectés dans l'outillage spécifique, constitué de deux tubes concentriques (l'émulsion est injectée dans le tube central et l'enrobage dans le tube de diamètre supérieur). Afin d'éviter un éventuel mélange entre l'émulsion et l'enrobage, les produits sont guidés sur une distance de 60 cm.

La composition est alors transférée jusqu'à l'extrudeur, puis cuite dans un four vapeur à une température de 110°C durant 2 minutes 30. A sa sortie, le produit est découpé (la forme et la taille des morceaux variant selon que la composition s'adresse aux chiens ou aux chats), mélangé à une sauce ou base, puis stérilisé de manière classique.

### Exemple 2

On prépare l'émulsion à partir de 63% de viandes et sous-produits de viande, notamment à partir de sous-produits de volaille (principalement carcasses), et/ou de sous-produits de porc ou boeuf (principalement foie et poumons), 15% de céréales, 1.5% de protéines texturantes végétales ou animales et 15% d'eau. L'emulsion contient aussi des vitamines , sels , arômes et colorants. On émulsifie ce mélange que l'on stocke dans une trémie munie d'une pompe qui servira par la suite au transfert de l'émulsion vers l'outillage spécifique.

L'enrobage est constitué d'un mélange de 9% de sang en poudre, 1% de guar, 1% d'alginate de sodium, 0.5% de carboxymethylcellulose, 3% de sel, 1% de sucre, 0.2% d'acide ascorbique, 28% de farine auquel on ajoute 49% d'eau et 2% de gluten et 5% de plasma.

Les mêmes procédés de fabrication que décrits précédemment sont utilisés.

### Exemple 3

On prépare l'émulsion à partir de 63% de viandes et sous-produits de viande, notamment à partir de sous-produits de volaille (principalement carcasses), et/ou de sous-produits de porc ou boeuf (principalement foie et poumons), 15% de céréales, 1.5% de protéines texturantes végétales ou animales et 15% d'eau. L'emulsion contient aussi des vitamines , sels, arômes et colorants. On émulsifie ce mélange que l'on stocke dans une trémie munie d'une pompe qui servira par la suite au transfert de l'émulsion vers l'outillage spécifique.

L'enrobage est constitué d'un mélange de 5% d'oxydes de fer, 5% d'amidon, 1% de guar, 1% de xanthane, 1% de carboxymethylcellulose, 2.5% de sucre, 30% de farine auquel on ajoute 44% d'eau, 5% de plasma et 5% de gluten.

Les mêmes procédés de fabrication que décrits précédemment sont utilisés.

## Revendications

1. Une composition alimentaire pour animaux comportant un revêtement pour obtenir un aspect de rôti après cuisson dans laquelle ce revêtement comprend au moins une source de pigment ou de colorant ; et une source de protéine ; **caractérisé en ce que** le pigment ou le colorant est choisi entre un ou plusieurs parmi le sucre caramélisé, le sang en poudre, le sang congelé, les oxydes minéraux, et une combinaison de ceux-ci.

2. Une composition alimentaire selon la revendication 1 dans laquelle la teneur en eau du revêtement ou la viscosité de ce revêtement est similaire à celle du produit enduit.

3. Une composition alimentaire selon la revendication 1 ou la revendication 2 dans laquelle ce pigment ou colorant comprend de 5% à 20% en poids de revêtement.

4. Une composition alimentaire selon l'une quelconque des revendications 1 à 3 dans laquelle cette protéine .
(i) comprend de 5% à 20% en poids du revêtement ; ou
(ii) est choisie entre au moins un parmi le plasma, le gluten, le sang et une combinaison de ceux-ci.

5. Une composition alimentaire selon l'une quelconque des revendications précédentes dans laquelle ce revêtement comprend en outre au moins un épaississeur, un liant, un additif, une farine, de l'eau et une combinaison de ceux-ci.

6. Une composition alimentaire selon l'une quelconque des revendications précédentes dans laquelle le produit enduit est choisi entre l'un ou plusieurs parmi une viande, produit dérivé de viande, poisson, produit dérivé de poisson, volaille, produit dérivé de volaille, porc, produit dérivé de porc, céréale et de l'eau ou une combinaison de ceux-ci.

7. Une composition alimentaire pour animaux selon l'une quelconque des revendications précédentes dans laquelle cette composition alimentaire est une émulsion ; facultativement dans laquelle cette émulsion comprend un mélange de viande, céréale, une protéine à texture de plante, une protéine à texture animale, de l'eau, des vitamines, du sel, un agent de sapidification, un colorant, et une combinaison de ceux-ci.

8. Une composition alimentaire selon l'une quelconque des revendications précédentes dans laquelle ce revêtement comprend un mélange de sucre caramélisé, une amidon, du guar, de la carboxyméthylcellulose, une farine, de l'eau, du plasma, du sang en poudre, de l'alginate de sodium, un sel, un sucre, de l'acide ascorbique, du gluten et un oxyde de fer.

9. Une composition alimentaire selon l'une quelconque des revendications précédentes dans laquelle ce revêtement après cuisson donne un aspect rôti aléatoire, irrégulier et non-homogène à cette composition alimentaire.

10. Une composition alimentaire selon l'une quelconque des revendications précédentes dans laquelle cette cuisson est mise en oeuvre par au moins un système à air chaud, un système à vapeur, un système combiné à air chaud et à vapeur, un système à micro-ondes.

11. Procédé pour préparer une composition alimentaire pour animaux ayant un aspect de rôti après cuisson, comprenant les étapes de :
enduire la composition alimentaire d'un revêtement comprenant une source de pigment choisie entre un ou plusieurs parmi le sucre caramélisé, sang en poudre, sang congelé, oxydes minéraux ou une combinaison de ceux-ci; et une source de protéine ;
cuire cette composition alimentaire ;
refroidir cette composition alimentaire.

12. Procédé selon la revendication 11 dans laquelle cette composition alimentaire comprend une émulsion comportant un mélange d'une viande, de produit dérivé de viande, de poisson, de produit dérivé de poisson, de volaille, de produit dérivé de volaille, de porc, de produit dérivé de porc, de vitamine, du sel, de colorant, de céréale et d'eau et un revêtement non-homogène.

13. Procédé selon la revendication 11 ou la revendication 12 dans laquelle le pigment comprend de 5% à 20% en poids de ce revêtement.

14. Procédé selon l'une quelconque des revendications 11 à 13 dans laquelle l'étape de cuisson en outre comprend l'étape de cuisson de cette composition alimentaire dans au moins un système à air chaud, un système à vapeur, un système combiné à air chaud et à vapeur, un système à micro-ondes et une extrudeuse.

## Claims

1. A food composition for animals comprising a coating for obtaining a roasted appearance after cooking wherein said coating comprises at least one pigment or colourant source; and a protein source; **characterised in that** the pigment or the colourant is selected from one or more among caramelised sugar, powdered blood, congealed blood, mineral oxides and a combination thereof.

2. A food composition according to claim 1 wherein the water content of the coating or the viscosity of said coating is similar to that of the coated product.

3. A food composition according to claim 1 or claim 2 wherein said pigment or colourant comprises 5% to 20% by weight of coating.

4. A food composition according to any one of claims 1 to 3 wherein said protein:
(i) comprises 5% to 20% by weight of the coating; or
(ii) is selected from at least one among plasma, gluten, blood or a combination thereof.

5. A food composition according to any one of the preceding claims wherein said coating further comprises at least one thickener, binder, additive, flour, water and a combination thereof.

6. A food composition according to any one of the preceding claims wherein said coated product is selected from one or more among a meat, a product derived from meat, fish, a product derived from fish, poultry, a product derived from poultry, pork, a product derived from pork, cereal and water or a combination thereof.

7. A food composition for animals according to any one of the preceding claims wherein said food composition is an emulsion; optionally wherein said emulsion comprises a mixture of meat, cereal, a protein of plant texture, a protein of animal texture, water, vitamins, salt, a saponification agent, a colourant and a combination thereof.

8. A food composition according to any one of the preceding claims wherein said coating comprises a mixture of caramelised sugar, a starch, guar, carboxymethylcellulose, a flour, water, plasma, powdered blood, sodium alginate, a salt, a sugar, ascorbic acid, gluten and an iron oxide.

9. A food composition according to any one of the preceding claims wherein said coating after cooking gives said food composition a random irregular and non-homogenous roasted appearance.

10. A food composition according to any one of the preceding claims wherein said cooking operation is implemented by at least a hot air system, a steam system, a combined hot air and steam system and a microwave system.

11. A process for preparing a food composition for animals having a roasted appearance after cooking, comprising the steps of:
coating the food composition with a coating comprising a pigment source selected from one or more among caramelised sugar, powdered blood, congealed blood, mineral oxides or a combination thereof; and a protein source;
cooking said food composition; and
cooling said food composition.

12. A process according to claim 11 wherein said food composition comprises an emulsion comprising a mixture of a meat, product derived from meat, fish, product derived from fish, poultry, product derived from poultry, pork, product derived from pork, vitamin, salt, colourant, cereal and water and a non-homogenous coating.

13. A process according to claim 11 or claim 12 wherein the pigment comprises 5% to 10% by weight of said coating.

14. A process according to any one of claims 11 to 13 wherein the cooking step further comprises the step of cooking said food composition in at least a hot air system, a steam system, a combined hot air and steam system, a microwave system and an extruder.

## Patentansprüche

1. Nahrungsmittelzusammensetzung aus Tieren mit einer äußeren Schicht, um zu bewirken, dass sie nach dem Garwerden geröstet erscheint, bei der die äußere Schicht mindestens eine Quelle an Pigmenten oder an Farbstoffen und eine Quelle an Proteinen aufweist, **dadurch gekennzeichnet, dass** das Pigment oder der Farbstoff aus einem oder mehreren von oder aus einer Kombination von karamellisierten Zucker, pulverisierten Blut, gefrorenen Blut oder mineralischen Oxiden ausgewählt wird.

2. Nahrungsmittelzusammensetzung nach Anspruch 1, bei der der Wassergehalt der äußeren Schicht oder die Viskosität der äußeren Schicht ähnlich denen des beschichteten Produktes sind.

3. Nahrungsmittelzusammensetzung nach Anspruch 1 oder 2, bei der das Pigment oder der Farbstoff 5 bis 20 Gewichtsprozent der äußeren Schicht aufweisen.

4. Nahrungsmittelzusammensetzung nach einem der Ansprüche 1 bis 3, bei der das Protein:
(i) 5 bis 20 Gewichtsprozent der äußeren Schicht aufweist oder
(ii) aus mindestens einem von einem Plasma, einem Gluten, einem Blut oder einer Kombination davon ausgewählt wird.

5. Nahrungsmittelzusammensetzung nach einem der vorhergehenden Ansprüche, bei der die äußere Schicht unter anderem mindestens eins von einem Eindickmittel, einem Bindemittel, einem Zusatzstoff, einem Mehl, Wasser oder einer Kombination davon aufweist.

6. Nahrungsmittelzusammensetzung nach einem der vorhergehenden Ansprüche, bei der das beschichtete Produkt aus einem oder mehreren von einem Fleisch, einem von Fleisch abgeleiteten Produkt, einem Fisch, einem von Fisch abgeleiteten Produkt, einem Geflügel, einem von Geflügel abgeleiteten Produkt, einem Schweinefleisch, einem von Schweinefleisch abgeleiteten Produkt, einem Getreide oder Wasser oder einer Kombination davon ausgewählt wird.

7. Nahrungsmittelzusammensetzung aus Tieren nach einem der vorhergehenden Ansprüche, bei der die Nahrungsmittelzusammensetzung eine Emulsion umfasst, die eine Mischung an einem Fleisch, einem Getreide, einem pflanzlichen Protein, einem tierischen Protein, Wasser, einen Vitamin, einem Salz, einem Geschmacksverstärker, einem Färbemittel oder einer Kombination davon aufweist.

8. Nahrungsmittelzusammensetzung nach einem der vorhergehenden Ansprüche, bei der die äußere Schicht eine Mischung aus einem karamellisierten Zucker, einer Stärke, einem Guarkern, einer Karboxymethyl-Zellulose, einem Mehl, Wasser, einem Plasma, einem pulverisierten Blut, einem Natrium-Alginat, einem Salz, einem Zucker, einer Ascorbinsäure, einem Gluten oder einem Eisenoxid aufweist.

9. Nahrungsmittelzusammensetzung nach einem der vorhergehenden Ansprüche, bei der die äußere Schicht nach dem Garwerden einen zufällig gerösteten Anschein bietet, der unregelmäßig und inhomogen für diese Nahrungsmittelzusammensetzung ist.

10. Nahrungsmittelzusammensetzung nach einem der vorhergehenden Ansprüche, bei der das Garwerden mindestens durch eines von einem System mit Heißluft, einem System mit Dampf, einem kombinierten System mit Heißluft und Dampf oder einem System mit Mikrowellen bewirkt wird.

11. Verfahren zur Herstellung einer Nahrungsmittelzusammensetzung aus Tieren, die einen gerösteten Anschein nach dem Garwerden bietet, wobei das Verfahren die Schritte umfasst:
ein Bestreichen der Nahrungsmittelzusammensetzung mit einer äußeren Schicht, die eine Quelle an Pigmenten, die aus einem oder mehreren von karamellisierten Zucker, pulverisierten Blut, gefrorenen Blut oder mineralischen Oxiden oder einer Kombination davon ausgewählt wird, und eine Quelle an Proteinen aufweist,
ein Garen dieser Nahrungsmittelzusammensetzung und
ein Abkühlen dieser Nahrungsmittelzusammensetzung.

12. Verfahren nach Anspruch 11, bei der die Nahrungsmittelzusammensetzung eine Emulsion umfasst, die eine Mischung an einem Fleisch, einem von Fleisch abgeleiteten Produkt, einem Fisch, einem von Fisch abgeleiteten Produkt, einem Geflügel, einem von Geflügel abgeleiteten Produkt, einem Schweinefleisch, einem von Schweinefleisch abgeleiteten Produkt, einem Vitamin, einem Salz, einem Färbemittel, einem Getreide oder Wasser oder einer Kombination davon aufweist.

13. Verfahren nach Anspruch 11 oder 12, bei der das Pigment 5 bis 20 Gewichtsprozent der äußeren Schicht aufweist.

14. Verfahren nach einem der Ansprüche 11 bis 13, bei der Schritt des Garens unter anderem einen Schritt des Garens der Nahrungsmittelzusammensetzung in mindestens einem von einem System mit Heißluft, einem System mit Dampf, einem kombinierten System mit Heißluft und Dampf, einem System mit Mikrowellen oder einer Presse aufweist.
